Europäisches Patentamt

European Patent Office

Office européen des brevets

(19)

(11) Numéro de publication : **0 053 211**
**B1**

(12) FASCICULE DE BREVET EUROPÉEN

(45) Date de publication du fascicule du brevet :
**18.01.84**

(51) Int. Cl.³ : **A 01 D 87/12**, A 01 D 90/08

(21) Numéro de dépôt : **80401730.9**

(22) Date de dépôt : **03.12.80**

(54) Groupeur-stockeur de balles de paille.

(43) Date de publication de la demande :
**09.06.82 Bulletin 82/23**

(45) Mention de la délivrance du brevet :
**18.01.84 Bulletin 84/03**

(84) Etats contractants désignés :
**AT BE CH DE GB IT LI LU NL SE**

(56) Documents cités :
**FR-A- 2 345 907**
**FR-A- 2 431 824**
**GB-A- 1 505 768**
**US-A- 2 727 352**
**US-A- 3 010 593**
**US-A- 3 563 162**

(73) Titulaire : **Nau, Henri**
**La Bironnière Clouè**
**F-86600 Lusignan (Vienne) (FR)**

(72) Inventeur : **Nau, Henri**
**La Bironnière Clouè**
**F-86600 Lusignan (Vienne) (FR)**

(74) Mandataire : **Ducas, Michel Louis Marie et al**
**Cabinet Boettcher 23, rue La Boétie**
**F-75008 Paris (FR)**

## Groupeur-stockeur de balles de paille

L'invention a pour objet un groupeur-stockeur de balles parallélépipédiques de paille monté sur une remorque ou autre véhicule et comportant un dispositif de reprise des balles parallélépipédiques se présentant à un poste d'amenée dans le sens de leur plus grande dimension, un dispositif de poussée des balles une par une pour les disposer, dans un premier temps, en rangée complète disposée longitudinalement, des moyens pour constituer, dans un deuxième temps, plusieurs rangées complètes parallèles les unes aux autres et des moyens de liage pour constituer en paquet l'ensemble des balles constituées en plusieurs rangées.

On a vu se développer ces dernières années des dispositifs combinant plus ou moins efficacement une plus ou moins grande part des moyens rappelés ci-dessus pour obtenir des empilements de balles, parfois ficelées en paquets, qui sont ensuite déchargées par poussage ou par basculement. La plupart des solutions connues exigent des mécanismes compliqués, du fait de la difficulté d'empiler les unes sur les autres les bottes de paille, soit par-dessus, soit par-dessous.

Le certificat d'addition FR-A-2 431 824 décrit une remorque qui comprend un élévateur latéral de balles plaçant celles-ci sur un plancher équipé d'un transporteur, longitudinalement à ce plancher, et d'un transporteur transversal, ce qui permet de garnir totalement le plancher de balles et de décharger ces dernières une à une. Malgré la complexité de l'ensemble, les balles ne sont jamais liées en paquets et elles doivent toujours être manutentionnées une à une par la suite.

Le brevet GB-A-1 505 768 se rapporte à un engin analogue capable de ramasser des balles, de les empiler en plusieurs couches, de les décharger une à une, sans les lier en paquets.

Le brevet US-A-3 010 593 concerne un véhicule analogue plus important et plus perfectionné qui se charge et se décharge automatiquement d'un nombre considérable de balles empilées sur plusieurs rangs, mais qui les manutentionne une à une.

Le brevet US-A-3 563 162 envisage bien de lier des balles ensemble mais ce n'est pas avec le but d'en faire un paquet manipulable. L'engin que décrit ce brevet est conçu pour faire sur une plateforme basculable un empilement considérable de balles : sept couches superposées de quinze balles chacune. Pour que les couches d'une telle pile restent stables, après basculement et pose sur le sol, certaines couches, la quatrième et la septième dans l'exemple décrit, sont ceinturées par un lien. Mais on n'obtient pas de paquets assez bien liés pour qu'ils soient manutentionnables individuellement.

Un but de l'invention est de simplifier considérablement les machines connues et de rendre leur utilisation commode et rapide. Un autre but est de lier les balles en paquets manutentionnables facilement.

Le groupeur-stockeur du type décrit au début comporte des moyens selon lesquels les balles sont rangées debout, ceci étant réalisé par le fait que le dispositif de reprise au poste d'amenée de balle est un dispositif de relevage par basculement autour d'un axe transversal présentant chaque balle relevée, prête à être poussée, avec sa plus grande dimension dirigée verticalement, c'est-à-dire debout.

Ce moyen supprime toute nécessité d'empilage et donc tout moyen de déplacement vertical. Le rangement debout des balles en plusieurs rangs côte-à-côte facilite le liage qui, comme on le verra plus loin, peut se limiter à deux attaches développées chacune dans un plan horizontal.

Les buts de l'invention sont atteints par le fait que ce même dispositif de relevage par basculement et le dispositif de poussée de chaque balle sont combinés en un dispositif unique, qui comporte un berceau monté pivotant sur un chariot monté coulissant longitudinalement sur le châssis de la remorque et un vérin de commande du berceau en pivotement et/ou coulissement.

De cette façon, un seul mécanisme positionne la balle dans le bon sens et la pousse dans le groupeur-stockeur.

Il est conforme à l'invention que le groupeur-stockeur comporte un moyen d'accrochage libérable du chariot coulissant en position fixe sur le châssis de la remorque, ladite position fixe correspondant à la position basse de reprise d'une balle amenée à l'extrémité du couloir.

Selon une caractéristique les moyens pour constituer plusieurs rangées complètes comportent des bras verticaux poussés transversalement par un mécanisme de poussée, tel qu'un vérin. Il est avantageux que, dans un groupeur-stockeur avec une remorque selon l'invention comportant des moyens de basculement d'une partie de la remorque pour déversement des balles assemblées par commande au moyen d'un vérin de commande, dont une extrémité est liée au châssis de la remorque, seulement la partie de la remorque ne se trouvant pas dans l'alignement longitudinal du dispositif de poussée des balles une par une soit montée basculable sur le châssis de la remorque.

D'autres caractéristiques et avantages ressortiront de la description, donnée ci-après uniquement à titre d'exemple, d'un mode de réalisation de l'invention. On se reportera à cet effet aux dessins annexés, dans lesquels :

la figure 1 est une vue latérale de gauche, selon I de la figure 2 d'un groupeur-stockeur de l'invention avec sa remorque, dont on a enlevé, pour la compréhension, le bouclier ou bras de poussée constituant les moyens pour constituer plusieurs rangées ;

la figure 2 est une vue partielle en plan de l'appareil de la figure 1 ;

la figure 3 est une vue de droite selon III-III de la figure 2 montrant le mécanisme de basculement du groupeur-stockeur des figures 1 et 2.

Un groupeur-stockeur 1 est installé à l'arrière d'un châssis 2 d'une remorque 1a pouvant être attelée en 3 au châssis 4 d'un presseur de balle comportant un couloir élévateur 5 lui-même lié par une articulation 6 au droit de l'articulation d'attelage 3 à un couloir d'amenée descendant 7 monté fixe sur le châssis 2 et constituant poste d'amenée 8 aligné avec le couloir d'évacuation 5.

Le fond 11 du châssis 2 de la remorque est divisé en deux zones normalement de niveau, à savoir une zone 12 à fond fixe 13 disposée dans l'alignement du couloir d'amenée 7 et sensiblement de même largeur et une zone 14 à fond basculant 15, comme il sera exposé plus loin.

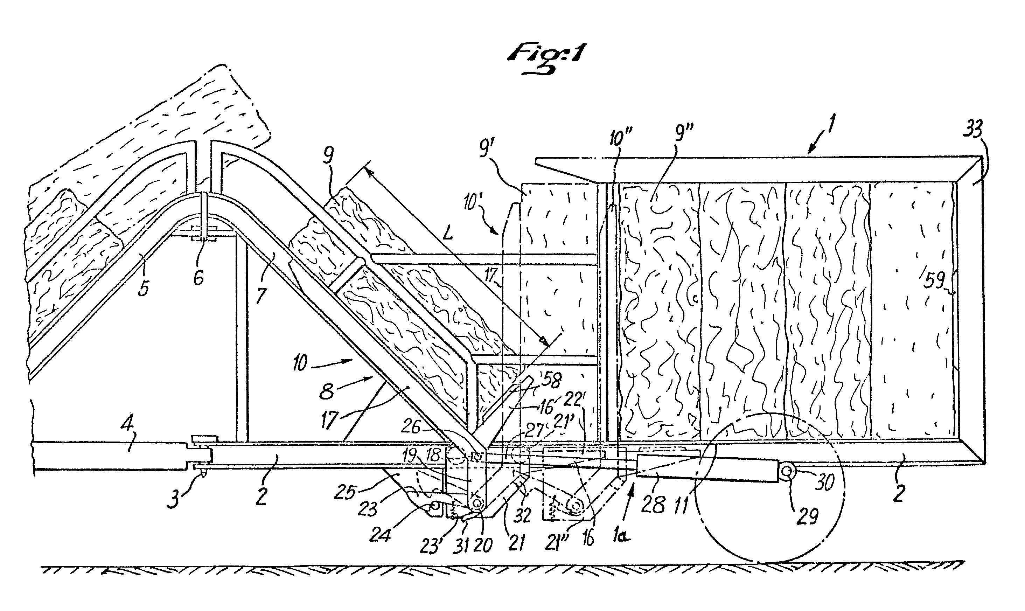

Les balles 9 qui arrivent de façon connue en soi, au point haut de jonction des deux couloirs 5 et 7, glissent dans le couloir 7 où elles sont reçues, avec leur plus grande dimension L dirigée selon le sens du couloir, par un bras 16 s'étendant perpendiculairement vers le haut et solidaire d'un berceau 17 posant à ce moment au fond du couloir 7. Le berceau 17 avec son bras 16 est monté à l'extrémité coudée 18 d'un levier 19 monté pivotant autour d'un axe horizontal 20 porté par un chariot 21 pouvant coulisser avec des galets 21′ sur des glissières 22 du châssis 2. Sur l'axe 20 est également monté, libre en rotation, un crochet 23 dont le bec est tourné vers le bas, tiré vers le bas par un ressort 23′ et qui, dans la situation représentée en trait plein à la figure 1, est accroché sur un goujon 24 s'étendant transversalement d'une console 25 solidaire du châssis 2. D'autre part, l'extrémité coudée 18 du levier 19 portant le berceau 17 et le bras 16 comporte un pivot 26 d'attache de l'extrémité 27 d'un vérin 28, dont l'autre extrémité est attachée par articulation 29 à un point 30 du châssis 2 longitudinalement éloigné, à droite sur la figure 1. Le bras 16 porte en outre un taquet solidaire 31 qui, lorsque le berceau 17, soumis à une force de traction exercée par le vérin 28, est relevé par pivotement autour de l'axe 20, vient en contact de butée avec le crochet 23 pour le soulever contre la force du ressort 23′ et le dégager du goujon 24 juste avant que l'ensemble 10 constitué par le berceau 17, le bras 16 et le levier 19 ne vienne en butée contre un taquet 32 solidaire du chariot 21, c'est-à-dire dans la position 10′ en trait interrompu. Dans cette position 10′, le berceau 17 est vertical, le bras 16 est horizontal et supporte la balle 9 debout en 9′, c'est-à-dire avec sa plus grande dimension en hauteur. Si, à partir de cette position, on continue à exercer une traction par le vérin 28, le chariot 21, étant maintenant libéré par soulèvement du crochet 23, est tiré vers la droite de la figure jusqu'en 21″ où il entraîne l'ensemble 10 par simple translation de la position 10′ à la position 10″, ce qui entraîne la balle 9 de la position 9′ à la position 9″ sur la zone 12 à fond fixe 13 du fond 11 du châssis 2. Si une ou plusieurs balles sont déjà sur ce fond fixe, elles sont poussées jusqu'à ce que la première d'entre elles atteigne la paroi extrême 33. Lorsque la balle est en 9″ on peut repousser l'ensemble 10 au moyen du vérin 28. L'ensemble 10 recule alors en translation du fait de la masse de la balle 9″ pesant sur le bras, jusqu'à ce que ce bras soit dégagé, après quoi l'ensemble 10 pivote en basculement descendant jusqu'à reprendre, par combinaison de son basculement et du recul du chariot 21, la position d'origine représentée en trait plein à la figure 1, c'est-à-dire avec le crochet 23 réenclenché sur le goujon 24 et le berceau 17 en position d'attente d'une nouvelle balle 9.

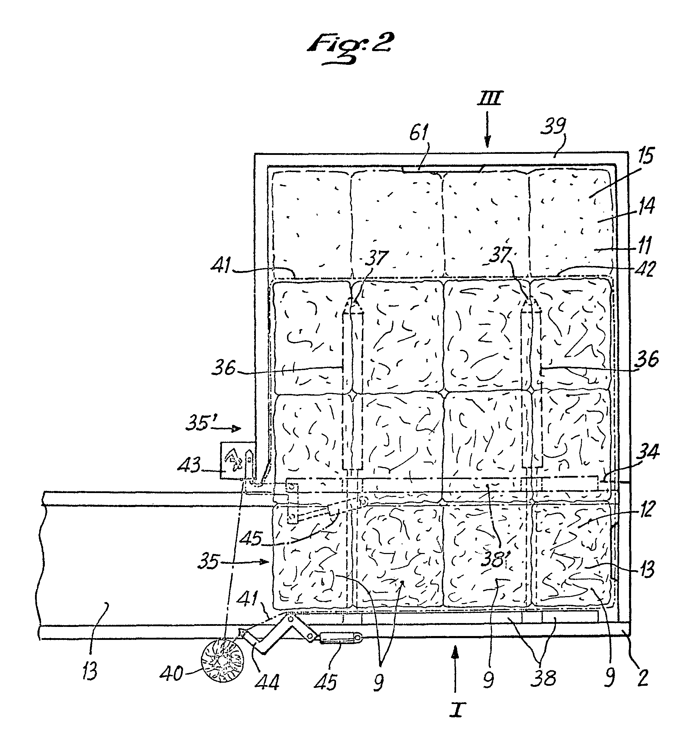

On se reportera maintenant à la figure 2 où on voit que le fond fixe 13 s'étend dans l'alignement du couloir d'amenée et que le fond basculant 15 s'étend sur toute la surface de l'appareil, à l'exception du fond fixe 13. On a indiqué par 34 la ligne de séparation entre le fond fixe 13 et le fond basculant 15. Lorsqu'on a amené quatre balles 9 sur le fond fixe, on a constitué une rangée 35. Pour pousser d'un coup cette rangée 35 dans la zone 14 à fond basculant 15, on a prévu deux vérins 36 attelés, d'une part, sous le châssis 2 en des points fixes 37 et, d'autre part, à un pousseur 38 pouvant coulisser transversalement pour pousser la rangée 35 à l'écart de la zone à fond fixe où elle prend une nouvelle position 35′ correspondant à la position du pousseur représenté en trait interrompu en 38′. Si une ou plusieurs rangées sont déjà dans la zone à fond basculant, celles-ci sont automatiquement poussées jusqu'à la paroi latérale 39 de la partie à fond basculant.

Lorsque le fond basculant est plein, ici douze balles, on peut lier les trois rangées en un paquet, grâce à deux dispositifs de liage superposés à deux hauteurs différentes. A cet effet, le châssis porte deux distributeurs tendeurs 40 connus en soi de ficelle 41 faisant une boucle 42 qui est poussée par les rangées de bottes. L'extrémité libre de la ficelle est retenue par un lieur 43 connu en soi, dans lequel une aiguille 44 montée sur le pousseur 38 peut être actionnée par un vérin 45, ceci s'appliquant pour chacune des deux ficelles.

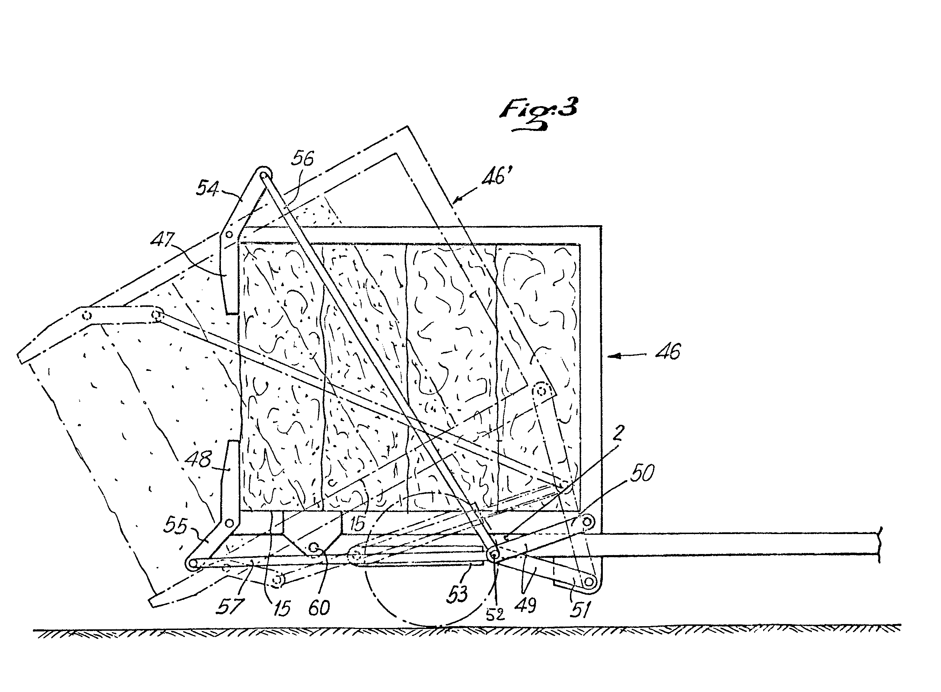

Selon l'invention, seule la zone 14 de l'appareil comporte un fond basculant 15. En fait, toute la caisse 46 comprenant le fond basculant 15 est solidaire de ce fond et bascule avec lui. Le châssis 2 comporte un axe d'articulation arrière 60 pour la caisse 46 qui comporte des hayons ou ridelles supérieur 47 et inférieur 48. A l'avant, la caisse 46 repose normalement sur le châssis 2, auquel elle est liée par un ciseau 49, dont une branche 50 est articulée à l'avant de la caisse 46 et l'autre branche 51 à l'avant du châssis 2, qui est ici plus court que dans la partie à fond fixe s'étendant jusqu'au couloir. L'axe 52 du ciseau est attelé à l'extrémité d'un vérin 53, dont l'autre extrémité est attelée au châssis 2. Par élongation du vérin 53, le ciseau s'ouvre et la caisse 46 bascule en 46′ représenté en trait interrompu à la figure 3. Simultanément les hayons ou ridelles 47 et 48, qui sont reliés par leviers 54 et 55 et tringles 56 et 57 à l'axe 52 du ciseau 49, dégagent l'arrière de la caisse 46 pour que, par simple gravité, le paquet de bottes 9 soit déchargé au sol. La ridelle ou hayon inférieur 48 est disposée pour être alors en prolongement du plan du fond 15.

L'appareil comporte encore des palpeurs à contacts pour la commande des vérins de façon connue en soi. Le bras 16 comporte un palpeur 58 pour la commande d'une séquence de rétraction puis d'élongation du vérin 28 pour que le berceau relève la balle et la pousse dans l'appareil puis revienne en attente. La paroi extrême 33 comporte, à l'extrémité de la zone 12 à fond fixe 13, un autre palpeur 59 pour la commande d'une séquence de poussée par les vérins 36 d'une rangée dans la zone 14 à fond basculant 15.

Enfin la paroi latérale 39 de la zone 14 à fond basculant 15 comporte un palpeur 61 pour la commande du vérin 45 du lieur et du vérin 53 commandant le basculement de déchargement du paquet de bottes. En variante le vérin 45 du lieur 43 peut être commandé automatiquement par programmation après trois cycles d'intervention des vérins 36.

L'appareil de l'invention a été décrit en combinaison avec un élévateur de presseur de balles. Il pourra être adapté à toute autre utilisation ou même être rendu autonome par adjonction de tout dispositif connu pouvant prendre les balles au sol pour les charger.

**Revendications**

1. Groupeur-stockeur de balles parallélépipédiques de paille, avec une remorque à fond (1), en vue du liage de ces balles en un paquet, comprenant :
— un dispositif de reprise des balles parallélépipédiques se présentant à un poste d'amenée (8) dans le sens de leur plus grande dimension, le dispositif étant un dispositif de relevage par basculement entre une position couchée et une position relevée autour d'un axe transversal (20) relevant successivement chaque balle pour la mettre debout prête à être poussée avec sa plus grande dimension dirigée verticalement,
— un dispositif (10) de poussée des balles une par une pour les disposer en rangée complète,
— des moyens, tels qu'un pousseur (38) actionné par un vérin (36) en sens transversal à ladite rangée, pour constituer plusieurs rangées complètes parallèles accolées les unes aux autres en poussant successivement chaque rangée sur une zone (14) de la remorque située latéralement par rapport à l'alignement longitudinal du dispositif (10) de poussée, caractérisé en ce que le dispositif de relevage par basculement et le dispositif de poussée de chaque balle sont combinés pour constituer un dispositif unique comprenant un berceau de relevage (17) monté pivotant sur un chariot (21) qui est lui-même monté coulissant sur le châssis (2) de la remorque dans le sens longitudinal de chaque rangée, un vérin (28) étant articulé sur ce châssis (2) et attelé au berceau (17) pour provoquer les mouvements de pivotement de ce berceau (17) par rapport au chariot (21) et les mouvements de coulissement de ce dernier par rapport au châssis (2), des moyens complémentaires d'accrochage (23, 24) étant prévus sur le châssis (2) et sur le chariot (21) pour immobiliser ce dernier quand le berceau (17) est en position couchée de reprise de chaque balle tandis qu'un moyen de déverrouillage (31) est prévu sur le berceau (17) pour agir sur les moyens de verrouillage (23, 24) et libérer le chariot (21) quand ce berceau (17) atteint sa position relevée, permettant ainsi le coulissement du chariot (21).

2. Groupeur-stockeur selon la revendication 1, caractérisé en ce que les moyens d'accrochage (23, 24) comprennent un crochet (23) articulé sur le chariot (21) pour le verrouiller par rapport au châssis (2) de la remorque à une position fixe qui correspond à la partie basse du couloir (7) constituant le poste d'amenée (8) de chaque balle où s'effectue la reprise de celle-ci.

3. Groupeur-stockeur selon la revendication 2, caractérisé en ce que le berceau (17) est muni d'un taquet (31) de déverrouillage déplaçable avec lui en basculement et rencontrant le crochet (23) dans le sens du dégagement de ce dernier par rapport au châssis (2) dès que le berceau (17) en cours de relevage atteint une position voisine de la verticale.

4. Groupeur-stockeur selon la revendication 1, comportant des moyens de basculement d'une partie de la remorque pour déversement de l'ensemble des balles mises en rangées, ce déversement étant effectué au moyen d'un vérin de commande (53) dont une extrémité est articulée sur le châssis (2) de la remorque, caractérisé en ce que seule la zone (14) de la remorque ne se trouvant pas dans l'alignement longitudinal du dispositif (10) de poussée des balles une par une est montée basculable.

5. Groupeur-stockeur selon l'une quelconque des revendications 1 à 3, comprenant des moyens de basculement avec un vérin (53), au moins de la zone (14) de la remorque autour d'un axe de basculement (60), caractérisé en ce que, du côté opposé à celui de cet axe (60), la partie basculable (46) correspondant à cette zone (14) est réunie au reste du châssis (2) par des leviers (50, 51) articulés en ciseaux au moyen d'un axe (52) avec lequel est articulée une extrémité du vérin (53).

6. Groupeur-stockeur selon la revendication 5, caractérisé en ce qu'il comprend du côté du déversement des ridelles ou des hayons articulés (47, 48) commandés en ouverture et en fermeture par une tringlerie (54, 55, 56, 57) réunie à l'axe (52) commun des leviers (50, 51).

7. Groupeur-stockeur selon la revendication 6, caractérisé en ce qu'il comprend au moins une ridelle basculante (48) qui, en position de basculement, se trouve dans le prolongement du fond (15) de la zone (14) basculante.

8. Groupeur-stockeur selon l'une quelconque des revendications 1 à 7, caractérisé en ce qu'il comprend à une hauteur déterminée au-dessus du fond (15) de la zone (14) au moins un ensemble distributeur-tendeur-lieur (40, 43, 44), connu en soi, d'une ficelle (41) faisant dans un plan horizontal une boucle (42) qui est poussée par les balles, une aiguille (44) du lieur étant montée sur le pousseur (38) avec un vérin de manœuvre (45).

## Claims

1. A grouper-stocker for block bales of straw, having a trailer with a bed (11), with a view to binding these bales into a package, and comprising :
— a device for taking over block bales appearing at an arrival station (8) in the direction of their longest dimension, the device being a device for raising by tilting between a prone position and a raised position about a transverse axis (20), the device raising each bale in succession in order to set it upright, ready for being pushed along with its longest dimension directed vertically ;
— a device (10) for pushing the bales along one by one in order to arrange them in a complete row ;
— means such as a thruster (38) actuated by a jack (36) in the direction transverse to the said row in order to form a number of parallel complete rows side by side with one another by pushing each row in succession onto a zone (14) of the trailer situated at the side with respect to the longitudinal alignment of the pusher device (10) ; characterized in that the device for raising by tilting and the device for pushing each bale along are combined to form a single device comprising a lifting-cradle (17) mounted pivotally on a carriage (21) which in turn is mounted to slide along the frame (2) of the trailer in the direction longitudinal to each row, a jack (28) being hinged onto this frame (2) and coupled to the cradle (17) in order to cause the pivotal movements of this cradle (17) with respect to the carriage (21) and the sliding movements of the latter with respect to the frame (2), complementary catch means (23, 24) being provided on the frame (2) and on the carriage (21) in order to immobilize the latter when the cradle (17) is in the prone position for taking over each bale whilst means of unlocking (31) are provided on the cradle (17) for acting upon the locking means (23, 24) and freeing the carriage (21) when the said cradle (17) reaches its raised position, thus allowing sliding of the carriage (21).

2. A grouper-stocker as in Claim 1, characterized in that the catch means (23, 24) comprise a hook (23) hinged onto the carriage (21) in order to lock it with respect to the frame (2) of the trailer in a fixed position which corresponds with the bottom portion of the chute (7) forming the arrival station (8) for each bale where taking-over of it is effected.

3. A grouper-stocker as in Claim 2, characterized in that the cradle (17) is equipped with an unlocking-cam which can move with it as it tilts and which meets the hook (23) in the direction for disengagement of the latter with respect to the frame (2) as soon as the cradle (17) during the course of being raised reaches a nearly vertical position.

4. A grouper-stocker as in Claim 1, which includes means of tilting one portion of the trailer for tipping off the group of bales set in rows, this tipping-off being effected by means of an operating jack (53), one end of which is hinged onto the frame (2) of the trailer, characterized in that it is only that zone (14) of the trailer, which does not lie in longitudinal alignment with the device (10) for pushing the bales along one by one, which is mounted to be able to tilt.

5. A grouper-stocker as in any one of the Claims 1 to 3, comprising means of tilting by a jack (53) of at least the zone (14) of the trailer about an axis of tilt (60), characterized in that at the side opposite from that of this axis (60) the tiltable portion (46) corresponding with this zone (14) is joined to the rest of the frame (2) by levers (50, 51) hinged like scissors by means of a pin (52) to which is hinged one end of the jack (53).

6. A grouper-stocker as in Claim 5, characterized in that it comprises at the tipping-off side hinged boards or gates (47, 48) controlled in opening and in closing by a linkage (54, 55, 56, 57) joined to the pin (52) common to the levers (50, 51).

7. A grouper-stocker as in Claim 6, characterized in that it comprises at least one tilting board (48) which in the position of tilt lies in prolongation of the bed (15) of the tilting zone (14).

8. A grouper-stocker as in any one of the Claims 1 to 7, characterized in that it comprises at a given height above the bed (15) of the zone (14) at least one dispenser-stretcher-binder group (40, 43, 44) known in itself, for a twine (41) which forms in a horizontal plane a loop (42) which is pushed along by the bales, a needle (44) in the binder being mounted on the thruster (38) with an operating jack (45).

## Ansprüche

1. Stapelgerät zum Gruppieren von parallelelipedförmigen Strohballen, mit einem bodenseitigen Schlepper (11), das zur Verbindung der Strohballen zu einem Packet dient,
— mit einer Aufnahmevorrichtung für die parallelepipedförmigen Strohballen, die in der Bewegungsrichtung entsprechend ihrer grössten Abmessung in eine Aufnahmeposition (8) gelangen, wobei die Aufnahmevorrichtung als Aufrichtvorrichtung ausgebildet ist, die zwischen einer Ruhestellung und einer aufgerichteten Stellung um eine Querachse (20) schwenkbar ist und aufeinanderfolgend jeden Strohballen in eine stehende Stellung aufrichtet, in welcher er bereit ist, weitergedrückt zu werden, während seine grösste Abmessung vertikal verläuft, mit einer Andrückvorrichtung für die Strohballen, die jeweils an einem angreift, um sie in einer vollständigen Reihe anzuordnen,
— mit einer Vorrichtung, wie einer Schiebevorrichtung (38), sie durch einen Hubzylinder (36) in einem Richtungssinn quer zur genannten Reihe betätigt wird, um mehrere vollständige, parallele, nebeneinander geschichtete Reihen zu erzielen, indem aufeinanderfolgend jede Reihe auf eine Zone (14) des Schleppers gedrückt wird, die gegenüber der Längsfluchtung der Andrückvorrichtung (10) seitlich angeordnet ist, dadurch gekennzeichnet, dass die mittels Schwenkbewegung arbeitende Aufrichtvorrichtung und die Andrückvorrichtung für die Strohballen zu einer einzigen Vorrichtung kombiniert sind, welche ein Aufrichtelement (17) umfasst, das schwenkbar auf einem Wagen (21) befestigt ist, der selbst auf dem Rahmen (2) des Schleppers im Längssinne jeder Reihe verschiebbar ist, dass ein Hubzylinder (28) auf dem Rahmen (2) schwenkbar befestigt und mit dem Aufrichtelement (17) verbunden ist, um die Schwenkbewegung dieses Aufrichtelements (17) gegenüber dem Wagen (21) und die Verschiebungen desselben gegenüber dem Rahmen (2) zu erzeugen, dass eine zusätzliche Einhängvorrichtung (23, 24) auf dem Rahmen (2) und auf dem Wagen (21) vorgesehen ist, um letzteren zu sperren, wenn sich das Aufrichtelement (17) in seiner Ruhestellung zur Aufnahme eines Strohballens befindet, und dass eine Entriegelungsvorrichtung (31) am Aufrichtelement (17) vorhanden ist, die auf die Verriegelungsvorrichtung (23, 24) einwirkt und den Wagen (21) freigibt, wenn das Aufrichtelement (17), seine aufgerichtete Stellung erreicht, wodurch eine Verschiebung des Wagens (21) gestattet wird.

2. Stapelgerät nach Anspruch 1, dadurch gekennzeichnet, dass die Einhängvorrichtung (23, 24) einen auf dem Wagen (21) befestigten Haken (23) zur Verriegelung des Wagens gegenüber dem Rahmen (2) des Schleppers in eine festgelegte Stellung umfasst, die den unteren Abschnitt des Fördergangs (7) entspricht, welcher die Aufnahmestation (8) für jeden Strohballen bildet, in welcher das Erfassen derselben erfolgt.

3. Stapelgerät nach Anspruch 2, dadurch gekennzeichnet, dass das Aufrichtelement (17) mit einem Entriegelungsanschlag (31) ausgestattet ist, welcher bei der Verschwenkung des Aufrichtelements (17) mitbewegt wird und dabei den Haken (23) erfasst und aus seiner Verriegelung mit dem Rahmen (2) löst, sobald das Aufrichtelement (17) bei seiner Aufrichtbewegung eine der vertikalen Stellung benachbarte Position einnimmt.

4. Stapelgerät nach Anspruch 1, mit einer Kippvorrichtung für einen Teil des Schleppers zur Abgabe der Gesamtheit der in Reihe angeordneten Strohballen, wobei diese Abgabe mittels eines Steuerzylinders (53) erfolgt, dessen eines Ende auf dem Rahmen (2) des Schleppers gelagert ist, dadurch gekennzeichnet, dass allein der Bereich (14) des Schleppers, welcher sich nicht in Längsfluchtung mit der Andrückvorrichtung (10) für die Strohballen befindet, kippbar angeordnet ist.

5. Stapelgerät nach einem der Ansprüche 1 bis 3, mit einer einen Hubzylinder (53) umfassenden Kippvorrichtung für zumindest den Bereich (14) des Schleppers um eine Kippachse (60), dadurch gekennzeichnet, dass an der dieser Kippachse (60) entgegengesetzten Seite der kippbare Bereich (46), welcher dem genannten Bereich (14) entspricht, mit dem übrigen Teil des Rahmens (2) durch Hebel (50, 51) verbunden ist, die scherenartig mittels einer Achse (52) gelagert sind, an welcher ein Ende des Hubzylinders (53) befestigt ist.

6. Stapelgerät nach Anspruch 5, dadurch gekennzeichnet, dass an der Abgabeseite Leiteroder Spatenelemente (47, 48) schwenkbar befestigt sind, deren Öffnen oder Schliessen durch ein Gestänge (54, 55, 56, 57) steuerbar ist, welches mit der gemeinsamen Achse (52) der Hebel (50, 51) verbunden ist.

7. Stapelgerät nach Anspruch 6, dadurch gekennzeichnet, dass mindestens ein schwenkbares Leiterelement (48) vorhanden ist, welches sich in Schwenkstellung in Verlängerung des Bodens (15) des kippbaren Bereichs (14) befindet.

8. Stapelgerät nach einem der Ansprüche 1 bis 7, dadurch gekennzeichnet, dass sie in einer vorgegebenen Höhe oberhalb des Bodens (15) des Bereichs (14) mindestens eine Verteiler-Spann- und Knotervorrichtung (40, 43, 44) in an sich bekannter Weise umfasst, in welcher eine Schnur (41) in einer horizontalen Ebene einen Knoten (42) macht, welcher durch die Strohballen angedrückt wird, und in welcher eine Nadel (44) für den Knotvorgang auf der Schiebevorrichtung (38) mit einem Betätigungszylinder (45) befestigt ist.

Fig.1

1

# Fig.2

Fig:3

0 053 211